# EUROPEAN PATENT APPLICATION

(11) **EP 0 860 407 A2**
(43) Date of publication of application: **26.08.1998**
(21) Application number: 97109135.0
(22) Date of filing: 05.06.1997
(51) Int. Cl.: C05F 9/02, C05F 17/02

(54) **High-speed fermenting and drying apparatus for food garbage**

(30) Priority: 22.02.1997 KR 9705433
(71) Applicant: Hosan Corporation, Kangdong-ku, Seoul (KR)
(72) Inventor: Kim, Dong-Joo, Kangnam-ku, Seoul (KR)
(74) Representative: TER MEER STEINMEISTER & PARTNER GbR

(57) **Abstract**

The present invention relates to "a high-speed fermenting and drying apparatus for food garbage" comprising an air intake (18) for continuously supplying the ferment funguses and oxygen in air to a food garbage tank (10); a heat - supplying part (30) for indirectly heating the food garbage tank (10) by heat medium (21); a temperature and time controller (MC) for maintaining optimal temperature for the fermentation, and optimal temperature for the pyrolysis and drying for optimal time; an agitator (40) having first plates, second plates and third plates; and an offensive odor gas - removing part (50) for removing the offensive odor gas generated in the fermenting step and the pyrolysis and drying step, by means of the water-soluble odor gas', of the offensive odor gas, being dissolved into steam - condensed water and being discharged with the steam-condensed water, and by means of transmitting the flammable gas of the offensive odor gas to the upper part of the combustion chamber (32) and then the flammable gas'being burnt by combusition gas heat.

## Description

### BACKGROUND OF THE INVENTION

### Field of the Invention

The present invention relates to a fermenting and drying apparatus for food garbage, and more particularly to an apparatus for performing, for a minimum time, the fermentation of food garbage, and the pyrolysis and drying of the food garbage for its quantity decrease and its composting by maximizing effects of the fermentation, and the pyrolysis and drying, and for easily removing offensive odor gas generated during the fermenting step of the food garbage and the pyrolysis and drying step of the food garbage.

### Description of the Prior Art

A conventional food garbage - fermenting and drying apparatus has the structure, of a low - temperature and low - speed fermenting and drying method, comprising a food garbage tank, an agitator and a heat - supplying part. Therefore, an additional ferment fungus is added to the food garbage in order to compulsorily accelerate its fermentation. And, moisture content percentage - controlling stuff, such as rice bran or sawdust, is added to the food garbage in order to control the moisture content percentage of the food garbage.

And the conventional apparatus has the structure of the method for continuously maintaing temperature of the inside of the food garbage tank at degree of 70°C or below, so that it takes many hours, that is, at least about 48 hours to perform the fermentation and drying.

That is, the conventional apparatus needs addition such as ferment fungus and moisture content percentage - controlling stuff. But, even so, the quantity of the addition is not decreased by the fermentation and drying. As a result, the addition lowers the quantity decrease rate of the food garbage. And since the conventional apparatus has the structure of a low - temperature and low - speed fermenting and drying method, it takes at least about 48 hours to perform the fermentation and drying of the food garbage.

Moreover, the conventional apparatus is too big to be installed in a small area.

In addition, the conventional apparatus has difficulty in removing the offensive odor gas generated from the food garbage during the fermenting and drying step.

### SUMMARY OF THE INVENTION

The present invention is directed to a high - speed fermenting and drying apparatus for food garbage which substantially obviates above - mentioned problems due to limitations and disadvantages of the prior art.

The object of the present invention is to provide "a high - speed fermenting and drying apparatus for food garbage" for performing, for a minimum time, the fermentation of the food garbage, and the pyrolysis and drying of the food garbage for its quantity decrease and its composting by maximizing effets of the fermentation, and the pyrolysis and drying ; and for easily removing the offensive odor gas generated during the fermenting step of the food garbage and the pyrolysis and drying step of the food garbage by simple structure.

Other objects of the present invention will become apparent from the following detailed description, claims, and accompanying drawings.

In order to achieve these objects of the present invention, as embodied and described, "a high - speed fermenting and drying apparatus for food garbage" comprises: an air intake for continuously supplying the ferment funguses and oxygen in air to the food garbage tank ; a heat - supplying part for indirectly heating the food garbage tank by heat medium; a temperature and time controller for maintaining optimal temperature for the fermentation of the food garbage, and optimal temperature for the pyrolysis and drying of the food garbage, for optimal time ; an agitator having first plates, second plates and third plates ; and an offensive odor gas - removing part for removing the offensive odor gas generated during the fermenting step and the pyrolysis and drying step, by means of the water - soluble odor gas 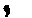 , of the offensive odor gas, being dissolved into steam - condensed water and being discharged with the steam - condensed water, and by means of transmitting the flammable gas of the offensive odor gas to the upper part of the combustion chamber and then the flammable gas 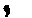 being burnt by combustion gas heat.

It is to be understood that both the foregoing general description and the following detailed description are exemplary and explanatory, and intended to provide further explanation of the present invention as claimed.

### BRIEF DESCRIPTION OF THE DRAWINGS

The accompanying drawings, which are included to provide a further understanding of the present invention and incorporated in and constitute a part of this specification, show embodiments of the present invention together with the description serve to explain the principles of the present invention.

In the drawings:
FIG. 1 is a front - sectional view showing the structure of an embodiment of the present invention ;
FIG. 2 is a side - sectional view showing the structure of an embodiment of the present invention ;
FIG. 3 is a flow sheet showing the structure of an offensive odor gas - removing part of an embodiment of the present invention ;
FIG. 4 is a plan view showing the schematic structure of the rest structure excluding the offensive odor gas - removing part of an embodiment of the present invention;
FIG. 5(a) is a front view showing the structure of an agitator of an embodiment of the present invention;
FIG. 5(b) is a side view showing the structure of the agitator of an embodiment of the present invention;
FIG. 5(c) is an enlarged front view showing the structure of an agitating arm, a first plate, a second plate and a third plate of the agitator of an embodiment of the present invention;
FIG. 5(d) is an enlarged plan view showing the structure of the first plate, the second plate and the third plate of the agitator of an embodiment of present the present invention;
FIG. 6 is a front - sectional view showing the structure of another embodiment of the present invention;
FIG. 7 is a plan view showing the schematic structure of the rest structure excluding the offensive odor gas - removing part of another embodiment of the present invention;
FIG. 8 is a front sectional view showing the operation of the present invention;

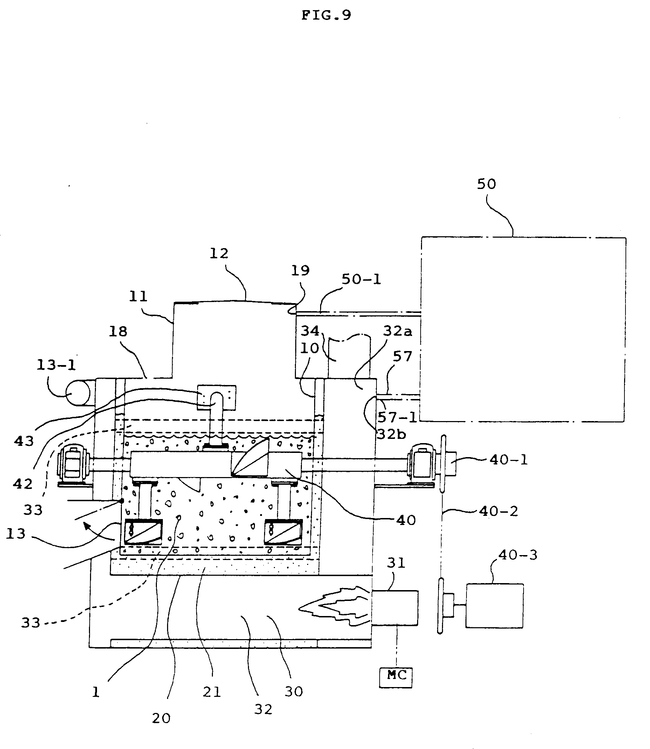

FIG. 9 is a side sectional view showing the operation of the present invention;
FIG. 10 is a flow sheet showing the operation of the offensive odor gas - removing part of the present invention; and
FIG. 11 is a front sectional view showing the operation of another embodiment of the present invention.

### DETAILED DESCRIPTION OF PREFERRED EMBODIMENT

Reference will now be made in detail to the preferred embodiments of the present invention, examples of which are shown in the accompanying drawings.

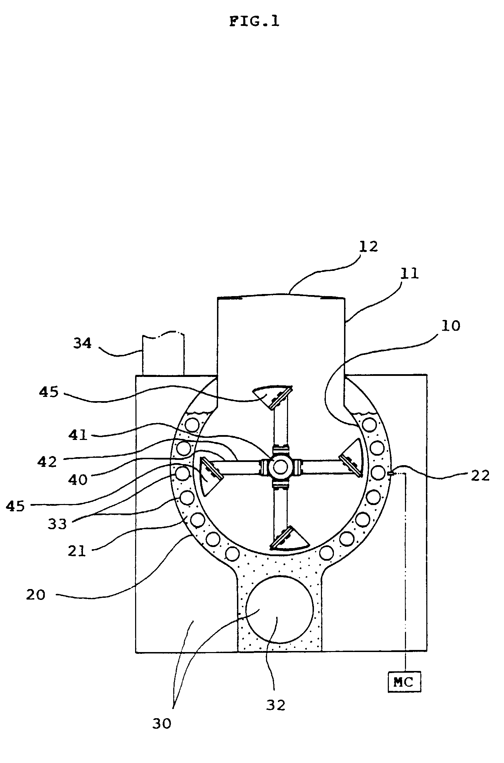

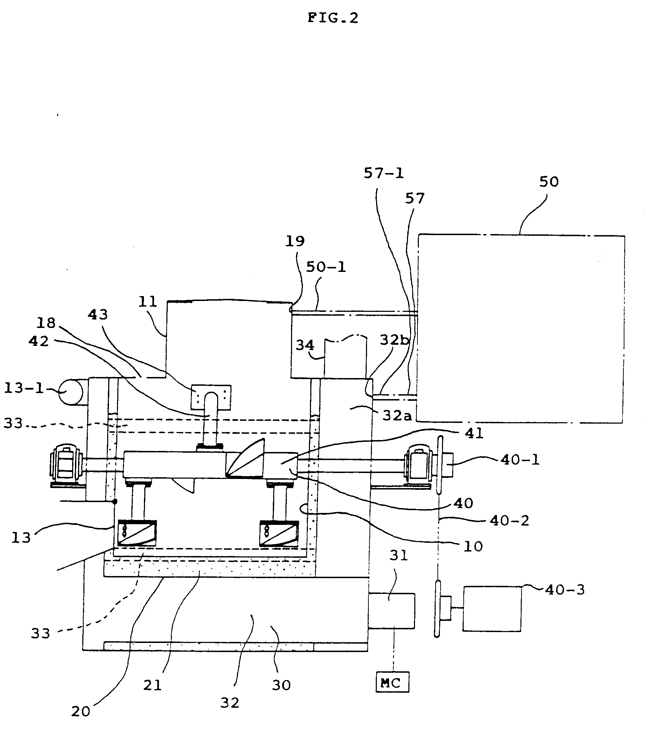

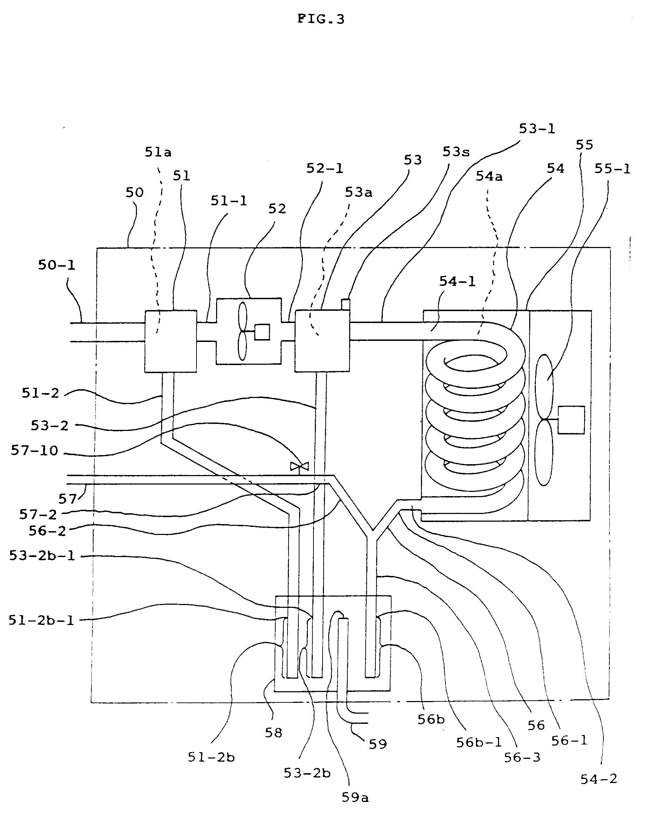

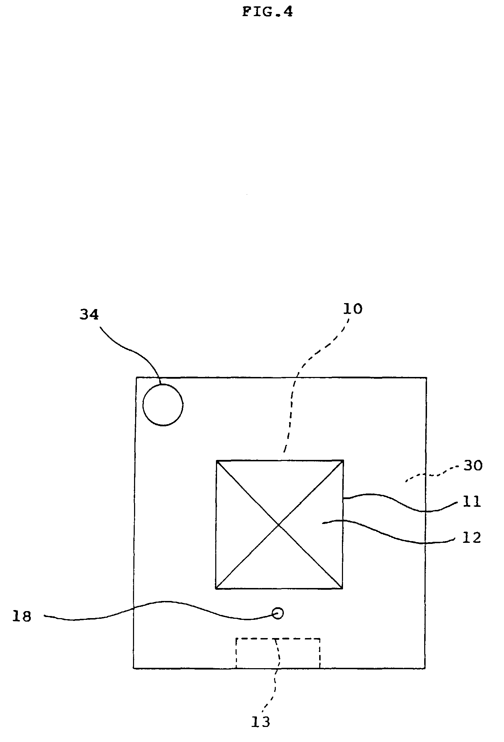

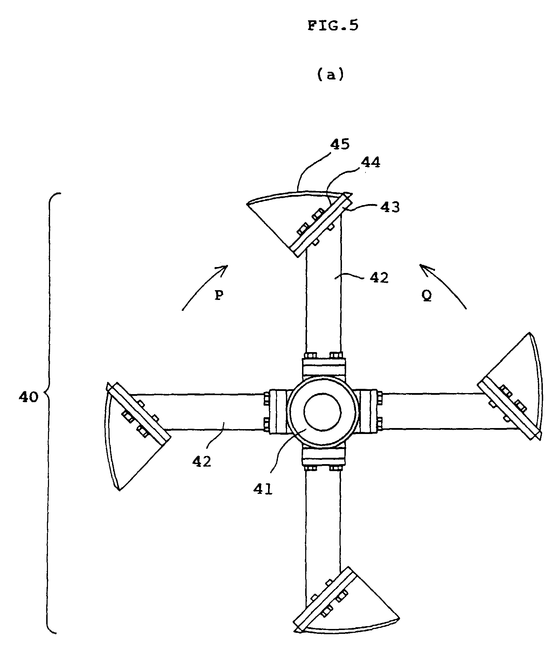

As shown in FIGs. 1 to 5(that is, 5(a) to 5(d)), and 8 to 10, the present invention is an improvement of a general fermenting and drying apparatus for food garbage. The general fermenting and drying apparatus for food garbage comprises : a food garbage tank 10 in which an inlet part 11 having a cover 12 is installed at upper part, and an outlet 13 is installed at one side 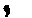 s lower part, in order to be able to discharge food garbage 1 outside after agitating, fermenting by ferment funguses and drying the food garbage 1 ; an agitator 40 including a rotation shaft 41 and plural agitating arms 42 in order to be able to agitate the food garbage 1 put in the food garbage tank 10; a heat - supplying part 30 including a burner 31, a combustion chamber 32, and a chimney 34 in order to be able to heat the food garbage tank 10 ; and an odor gas and steam - discharging outlet 19 installed at the upper part of the food garbage tank 10, or at the inlet part 11 thereof, in order to discharge the offensive odor and the steam generated during the food garbage 1 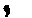 s fermentation and drying.

The present invention comprises below - described structures, in addition to the above described structure of the general fermenting and drying apparatus for food garbage,

In the present invention, a jacket 20 for heating the food garbage tank 10 through heat medium 21 embraces the food garbage tank 10, and plural combustion gas pipes 33 for heating the heat medium 21 are installed inside the jacket 20.

And the heat - supplying part 30 includes the combustion gas pipes 33 as parts of the combustion chamber 32, so that the jacket 20 is surrounded by the combustion chamber 32. General oil for heat medium is preferably used for the heat medium 21.

The jacket 20 has a heat medium thermo - sensor 22 for sensing temperature of the heat medium 21 in the jacket 20. And a temperature and time controller MC, is installed, which is for controlling the burner 31 according to signal of the heat medium thermo - sensor 22 in order to maintain predetermined temperature of the heat medium 21 for predetermined time, during a fermenting step of the food garbage 1 and during a pyrolysis and drying step, of the food garbage 1, following the fermenting step.

The heat medium thermo - sensor 22 is electrically connected to the temperature and time controller MC. And the temperature and time controller MC is electrically connected to the burner 31.

In the fermenting step of the food garbage 1, the predetermined temperature of the heat medium 21 in the jacket 20 is, preferably, about 75°C, and, at this time, temperature of the food garbage 1 is about 60°C. The predetermined time is, preferably, about 5 hours.

Following the fermenting step of the food garbage 1, in the pyrolysis and drying step of the food garbage 1, the predetermined temperature of the heat medium 21 in the jacket 20 becomes, preferably, about 140°C, and, at this time, temperature of the food garbage 1 becomes about 120°C, and the predetermined time is, preferably, about 12 to 20 hours according to the kinds of and the amount of the food garbage 1.

An air intake 18 for continuously supplying the ferment funguses and oxygen in air to the food garbage tank 10 is installed at the upper part of the food garbage tank 10. It is possible to more accelerate the fermenting step 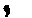 s operation, by adding general ferment fungus to the food garbage 1.

The agitator 40 has first rectangular plates 43 each of which is, as one united boby, joined with one end of each of the agitating arms 42 and slopes to lengthwise direction of each of the agitating arms 42 ; and the agitator 40 has second rectangular plates 44 each of which is joined with each of the first plates 43 to overlap in correspondence with each of the first plates 43 ; and the agitator 40 has almost right - angled triangle - shaped third plates 45 each of which has sloping surface slightly curved outward and is joined with each of the second plates 44, to be perpendicular to, and in diagonal direction of, each of the second plates 44 ; in order that the food garbage 1 in the food garbage tank 10 can be efficiently mixed with air, particularly the ferment funguses and oxygen in air, during forward rotation of the agitator 40, and in order that the food garbage 1 in the food garbage tank 10 can be discharged outside through the outlet 13 during reverse rotation of the agitator 40.

The second rectangular plate 44 for overlapping in correspondence with the first plate 43 is screwed to the first plate 43 in order to have possibility of being assembled or being disassembled. The screw joint is made, preferably, by both bolts 44a and female screws formed in the first plate 43. The second plate 44 has position - controlling grooves 44b for thereby controlling the position of the second plate 44 with respect to the first plate 43. One end of the second plate 44 is formed unevenly as an uneven part 44c for crushing the solid stuff contained in the food garbage 1.

The agitating arm 42 preferably has a ring - shaped section and, as a whole, a form of a cylindrical pipe. The agitating arm 42 is screwed to the rotation shaft 41, in order to have possibility of being assembled or being disassembled.

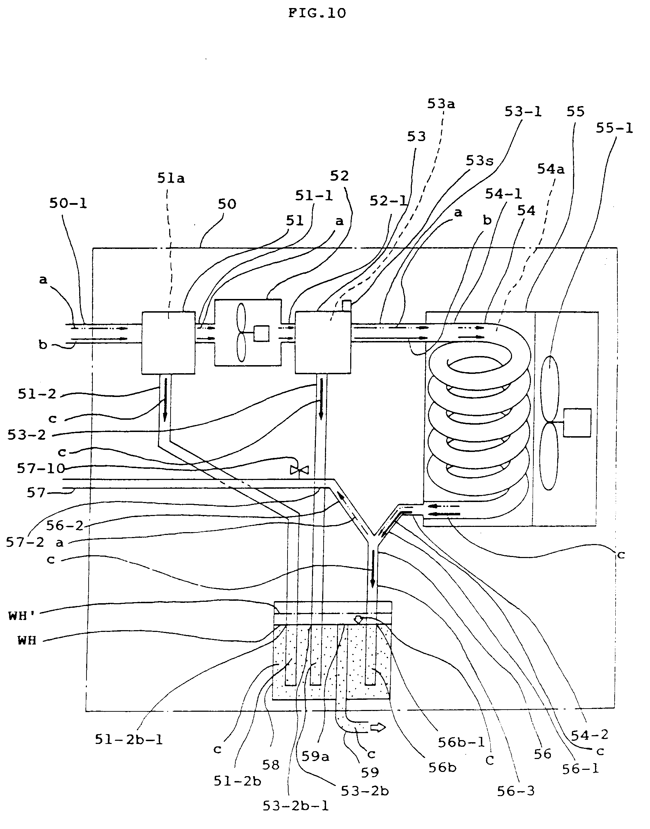

An offensive odor gas - removing part 50 is connected to the odor gas and steam - discharging outlet 19 through a connection pipe 50―1 through which the odor gas and the steam pass, in order that the offensive odor gas can be removed through the offensive odor gas - removing part 50, by means of water - soluble odor gas 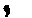 , of the offensive odor gas(a: refer to FIG.10), being dissolved into steam - condensed water (that is, water condensed from steam)(c:refer to FIG.10) and then being discharged with the steam - condensed water (c), and by means of transmitting rest gas excluding the water - soluble odor gas to upper part 32a of the combustion chamber 32 for flammable odor gas of the rest gas to be burnt by combustion gas heat of the combustion chamber 32, according as the offensive odor gas (a) and the steam(b: refer to FIG.10) generated in the fermenting step of the food garbage 1 and the pyrolysis and drying step of the food garbage 1 are discharged through the odor gas and steam - discharging outlet 19.

The offensive odor gas - removing part 50 comprises :
a first filter 51 which is connected to a connection pipe 50―1 and has a first drainage pipe 51―2 through which steam - condensed water (c), that is, water (c) condensed from steam (b), flows down to a steam - condensed water storage tank 58 when the odor gas (a) and the steam (b), having been discharged from the odor gas and steam - discharging outlet 19 through the connection pipe 50―1, pass through inside 51a of the first filter 51, and is also connected to a connection pipe 51―1 in order that the odor gas (a) and the steam (b) having passed through the inside 51a can be absorbed to an absorbing and transmitting fan 52 through the connection pipe 51―1 ;
the absorbing and transmitting fan 52 which is connected to the connection pipe 51―1 and is to absorb the odor gas (a) and the steam (b) from the first filter 51 through the connection pipe 51―1, and also connected to a connection pipe 52―1 in order to transmit the odor gas (a) and the steam (b) having been absorbed as above to the second filter 53 through the connection pipe 52―1 ;
the second filter 53 which is connected to the connection pipe 52―1 and has a second drainage pipe 53―2 through which steam - condensed water (c), that is, water (c) condensed from steam (b), flows down when the odor gas (a) and the steam (b), having been transmitted from the absorbing and transmitting fan 52 through the connection pipe 52―1, pass through inside 53a of the second filter 53, and is also connected to a connection pipe 53―1 in order that the odor gas (a) and the steam (b) having passed through the inside 53a can be transmitted to a condensing pipe 54 through the connection pipe 53―1 ;
the condensing pipe 54 which is connected to the connection pipe 53―1, and to be cooled by a cooling device 55 in order that the steam (b) can be condensed into steam - condensed water (c) when the odor gas (a) and the steam (b), having been transmitted from the second filter 53 through the connection pipe 53―1, pass through inside 54a of the condensing pipe 54 ;
the cooling device 55 for cooling the condensing pipe 54 ;
an odor gas transmission pipe 57 whose one end 57―1 is connected to the upper part 32a of the combustion chamber 32, in order that the odor gas (a), of the odor gas (a) and the steam - condensed water (c) having been transmitted from an outlet 54―2 of the condensing pipe 54, can be transmitted to the upper part 32a of the combustion chamber 32, for flammable odor gas of the odor gas (a) to be burnt by combustion gas heat of the combustion chamber 32 ;
a Y - shaped pipe 56 which includes an upper outlet 56―2 connected to the other end 57―2 of the odor gas transmission pipe 57, an upper inlet 56―1 connected to the outlet 54―2 of the condensing pipe 54 in order that the steam - condensed water (c), of the odor gas (a) and the steam - condensed water (c) having been transmitted from the outlet 54―2 of the condensing pipe 54, can flow down to the steam - condensed water storage tank 58, and a lower outlet 56―3 through which the steam - condensed water (c) can flow down to the steam - condensed water storage tank 58 ; and
the steam - condensed water storage tank 58 for storing the steam - condensed water (c) flowing down through the first drainage pipe 51―2, the second drainage pipe 53―2 and the Y - shaped pipe 56, and for then discharging the steam - condensed water (c) outside through a steam - condensed water - discharging pipe 59.

The water surface level of the steam - condensed water (c) in the steam - condensed water storage tank 58 is not lower than each of an upper end 51―2b―1 of a lower part 51―2b of the first drainage pipe 51―2, an upper end 53―2b―1 of a lower part 53―2b of the second drainage pipe 53―2 and an upper end 56b―1 of a lower part 56b of the Y - shaped pipe 56, in order to prevent the odor gas (a), in gas state, from entering the steam - condensed water storage tank 58 through the first drainage pipe 51―2, the second drainage pipe 53―2 and the Y - shaped pipe 56 ;
and the lower part 51―2b of the first drainage pipe 51―2, the lower part 53―2b of the second drainage pipe 53―2 and the lower part 56b of the Y - shaped pipe 56 are placed lower than an upper end 59a of the steam - condensed water - discharging pipe 59, in order that the steam - condensed water (c) can fill up the lower part 51―2b of the first drainage pipe 51―2, the lower part 53―2b of the second drainage pipe 53―2 and the lower part 56b of the Y - shaped pipe 56.

The first filter 51 and the second filter 53 are the general filters for filtering the dust. A valve 57―10 for controlling the transmission amount of the odor gas is installed around the other end 57―2 of the odor gas transmission pipe 57.

The second filter 53 has a thermo - sensor 53s for making the agitator 40, the absorbing and transmitting fan 52 and the cooling device 55 (a cooling fan 55―1 in the air - cooling cooler) turn on, when temperature of the odor gas (a) and the steam (b) passing through the second filter 53 reaches predetermined degree (preferably about 70°C) or above ; and for making the agitator 40, the absorbing and transmitting fan 52 and the cooling device 55 (the cooling fan 55―1 in the air - cooling cooler) turn off, when temperature of the odor gas (a) and the steam (b) passing through the second filter 53 becomes below the predetermined degree, according as operation of the burner 31 is terminated as the fermenting step and the pyrolysis and drying step get completed by control of the temperature and time controller MC and additional controller. The combustion chamber 32 is maintained at about 600°C during the operation, and the upper part 32a of the combustion chamber 32 is preferably maintained at 250°C.

An odor gas transmission outlet 32b is installed at the upper part 32a of the combustion chamber 32, and connected to one end 57―1 of the odor gas transmission pipe 57, in order that the odor gas (a) can be transmitted through the odor gas transmission pipe 57 to the upper part 32a.

The cooling device 55 is a general cooling device, and preferably an air - cooling cooler having a cooling fan 55―1. In the condensing pipe 54 cooled by the cooling device 55, its upper part is preferably maintained at about 65°C, and its lower part is preferably maintained at about 25°C.

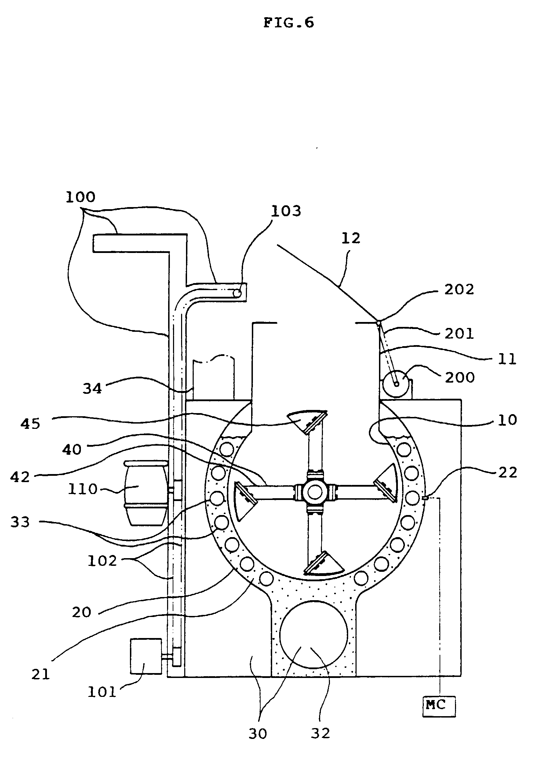

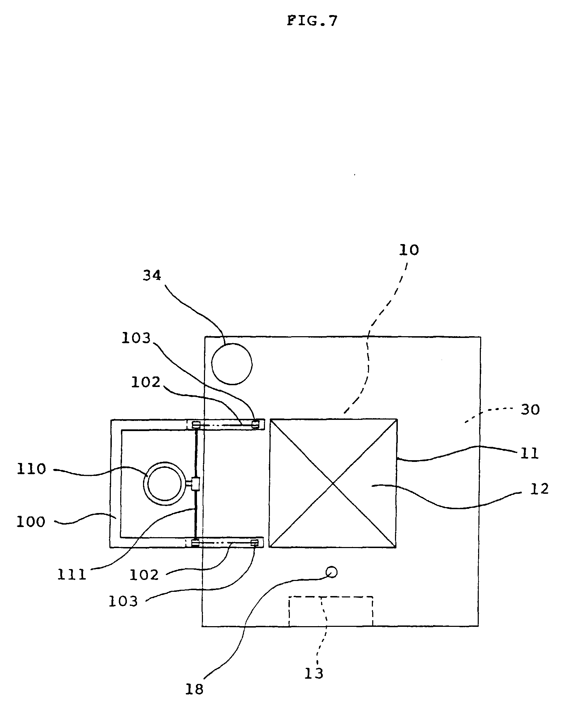

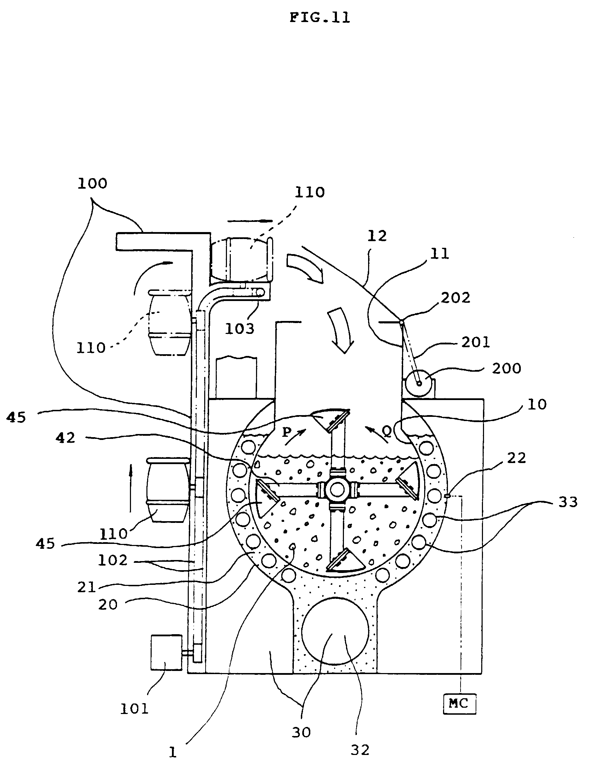

In another embodiment of the present invention, following structures, as shown in FIGs. 6, 7 and 11, are added to the above - described structures. That is, in the another embodiment of the present invention, a food garbage lift vat 110, which is supported by a lift - supporting bar 100 and driven by a motor 101, a chain 102 and a chain gear 103, is installed, in order to lift food garbage and to put the food garbage in the food garbage tank 10 from outside. Additionally, a cover 12 of the inlet part 11 of the food garbage tank 10 is driven by a motor 200, a chain 201 and a chain gear 202.

In the drawings, 13―1 is an outlet - driving motor, 40―1 is a chain gear, 40―2 is a chain, 40―3 is an agitator - driving motor, and 111 is a joining element.

The operation of the thus - structured embodiment of the present invention is as follows.

As shown in FIGs. 1 to 5 (that is, 5 (a) to 5 (d)) and 8 to 10, a jacket 20 for applying heat to the food garbage tank 10 through heat medium 21 is installed outside of the food garbage tank 10, and the plural combustion gas pipes 33 are installed inside the jacket 20. Accordingly, the heat medium 21 is heated by the heat supply from the combustion chamber 32 including the combustion gas pipes 33, and the food garbage 1 in the food garbage tank 10 is stably heated, so that the indirect heating from the heat source of the combustion chamber 32 is performed.

Since the heat medium 21 is general heat - medium oil, the food garbage 1 in the food garbage tank 10 is stably heated at stable degree.

According to the signal of the heat medium thermo - sensor 22, the operation of the burner 31 is controlled by the temperature and time controller MC. Accordingly, during the fermenting step of the food garbage 1, the temperature of the heat medium 21 in the jacket 20 becomes the predetermined degree, preferably about 75°C, and at this time the temperature of the food garbage 1 is about 60°C. These temperatures are maintained for the predetermined time, preferably for about 5 hours.

During the pyrolysis and drying step of the food garbage 1 following the fermenting step of the food garbage 1, the temperature of the heat medium 21 becomes the predetermined degree, preferably about 140°C, and at this time the temperature of the food garbage 1 is about 120°C.

These temperatures are maintained for the predetermined time, preferably for about 12 to 20 hours. Therefore, the preferable temperatures can be stably maintained by operation of the heat medium 21.

In the heat - supplying part 30, the combustion gas pipes 33 are parts of the combustion chamber 32, so that the jacket 20 is surrounded by the combustion chamber 32. As a result, the surface area for transmitting the heat of the combustion chamber 32 to the heat medium 21 is maximized, and thereby the heat medium 21 is most efficiently heated.

The air intake 18 is installed at the upper part of the food garbage tank 10, so that the ferment funguses and oxygen in air can be continuously supplied to the food garbage tank 10. Therefore, during the agitation and fermentation of the food garbage 1 in the food garbage tank 10, the fermentation effect is maximized by the oxygen and the ferment funguses continuously absorbed through the air intake 18, together with the ferment funguses previously existing in the food garbage 1. That is, the fermenting operation of the aerobic ferment funguses is maximized by the continuous supply of oxygen. Here, if the conventional ferment funguses are used, the fermentation effect is able to be more enhanced.

The absorption of air through the air intake 18 is continuously performed, according as air is discharged with the odor gas (a) and the steam (b) through the odor gas and steam - discharging outlet 19.

During the pyrolysis and drying step of the food garbage 1 following the fermenting step of the food garbage 1, the operation of the burner 31 is controlled by the temperature and time controller MC, according to the signal of the heat medium thermo - sensor 22. Accordingly, the temperature of the heat medium 21 in the jacket 20 becomes about 140°C, and at this time, the temperature of the food garbage 1 becomes about 120°C. These temperatures are stably maintained for about 12 to 20 hours. Accordingly, the food garbage 1 in the food garbage tank 10 is fully decomposed by heat, and simultaneously dried, so that the quantity decrease rate of the food garbage is maximized. By this pyrolysis and drying step, the present invention has the drying operation and drying effect prominently faster than the conventional apparatus, so that the quantity decrease of the food garbage 1 and the composting of the food garbage 1 are high - speedly performed.

The operation of the agitator 40 and its elements is performed as follows :

The agitator 40 has the first rectangular plates 43, the second rectangular plates 44 and the almost right - angled triangle - shaped third plates 45. Each of the first rectangular plates 43 is, as one united body, joined with one end of each of the agitating arms 42, and slopes to lengthwise direction of each of the arms 42. Each of the second rectangular plates 44 is joined with each of the first plates 43 to overlap in correspondence with each of the first plates 43. Each of the almost right - angled triangle - shaped third plates 45 has sloping - surface which is slightly curved outward and joined with each of the second plates 44, to be perpendicular to, and in diagonal direction of, each of the second plates 44.

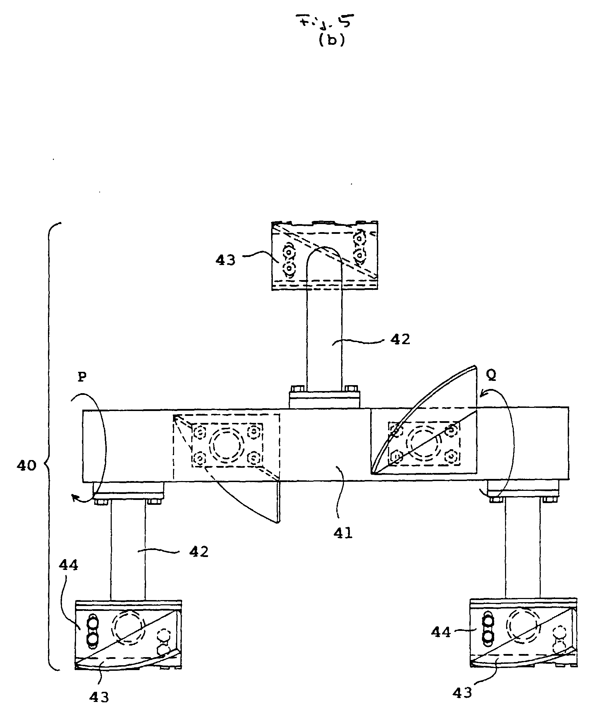

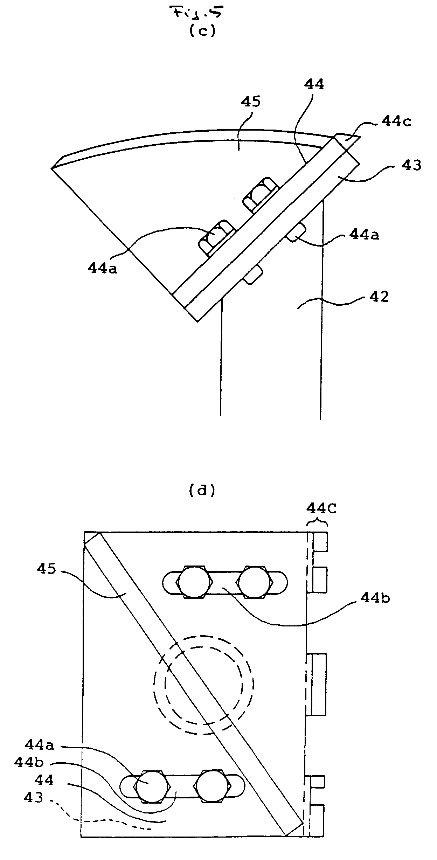

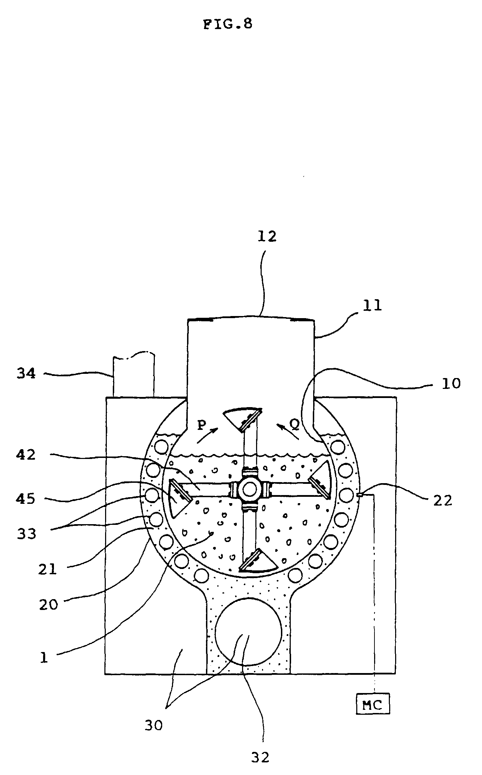

Accordingly, the food garbage 1 in the food garbage tank 10 is efficiently mixed with air, particularly, the ferment funguses and oxygen in air, and efficently agitated, during the forward rotation of the agitator 40 (that is, the rotation of arrow P direction in FIGs.5 (a) and 5 (b), and FIG. 8). During the reverse rotation of the agitator 40 (that is, the rotation of the arrow Q direction in FIGs. 5 (a) and 5 (b), and FIG. 8), the food garbage 1 in the food garbage tank 10 is discharged outside through the outlet 13.

Therefore, the food garbage 1 in the food garbage tank 10 is efficiently mixed with the ferment funguses and oxygen in air, and efficiently agitated and decomposed, mainly, by the operations of the first plates 43 and second plates 44 during the forward rotation of the agitator 40, so that the effect of the fermenting operation by the ferment funguses particularly the aerobic ferment funguses, and the effect of the pyrolysis and drying operation are maximized. In addition, according to the termination of the fermenting step, and the pyrolysis and drying step, the food garbage 1 in the food garbage tank 10 can be easily discharged outside through the outlet 13, mainly, by the operation of the third plates 45 during the reverse rotation of the agitator 40.

Since the second rectangular plate 44 overlapped in correspondence with the first plate 43 is screwed to the first plate 43, the second plate 44 is easily assembled to, or easily disassembled from, the first plate 43 when its assembly or its disassembly is necessary for example the case of cleaning the agitator 40.

Since, in order to be able to control the position of the second plate 44 with respect to the first plate 43 the second plate 44 has plural position - controlling grooves 44b, the interval between an end part of the second plate 44 and the food garbage tank 10 can be properly controlled.

Since the end of the second plate 44 is made in the form of the uneven part 44c having uneven end in order to cruch the solid stuff contained in the food garbage 1, the solid stuff, namely the bone groups of the cow or the chicken, can be crushed in a minimum size.

Since the agitating arm 42 has a ring - shaped section, remainder of the food garbage 1 inserted in the agitating arms 42 does not exist. Since the agitating arms 42 are screwed to the rotation shaft 41, the agitating arms 42 can be easily disassembled and cleaned.

The operation of the offensive odor gas - removing part 50 connected to the odor gas and steam - discharging outlet 19 is performed as follows:

In the first filter 51 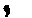 s filtering dusts mixed with the odor gas (a) and the steam (b) which have been discharged from the odor gas and steam - discharging outlet 19 through the connection pipe 50―1, the steam (b) is partially cooled by the temperature of the first filter 51 whose natural temperature is relatively low, namely near the normal temperature, when the odor gas (a) and the steam (b), whose temperatures are about 100°C at the time of their having been discharged from the connection pipe 50―1, pass through the inside 51a of the first filter 51. Accordingly the steam (b) becomes the steam - condensed water (c), and the steam - condensed water (c) flows down to the steam - condensed water storage tank 58 through the first drainage pipe 51―2.

By means of the connection pipe 51―1 and the absorbing and transmitting fan 52, the odor gas (a) and the steam (b) from the first filter 51 are absorbed to the absorbing and transmitting fan 52 through the connection pipe 51―1, and then the odor gas (a) and the steam (b) are transmitted to the second filter 53 through the connection pipe 52―1.

In the second filter 53 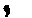 s again filtering dusts mixed with the odor gas (a) and the steam (b) which have been transmitted from the absorbing and transmitting fan 52 through the connection pipe 52―1, the steam (b) is partially cooled by the temperature of the second filter 53 whose natural temperature is relatively low, namely near the normal temperature, when the odor gas (a) and the steam (b), whose temperature are about 80°C at the time of their having been transmitted from the connection pipe 52―1, pass through the inside 53a of the second filter 53. Accordingly, the steam (b) becomes the steam - condensed water (c), and the steam - condensed water (c) flows down to the steam - condensed water storage tank 58 through the second drainage pipe 53―2.

According as the odor gas (a) and the steam (b), whose temperature are about 70°C at the time of their having been transmitted from the second filter 53, pass through the inside 54a of the condensing pipe 54, the steam (b) is condensed into the steam - condensed water (c) from at the inlet 54―1, namely the upper part, of the condensing pipe 54, whose temperature is about 65°C, and more condensed into the steam - condensed water (c) at the lower part, of the condensing pipe 54, whose temperature is about 25°C, by the condensing pipe 54 and the cooling device 55. And then the steam - condensed water (c) flows down.

According as the steam - condensed water (c) flows down through the first drainage pipe 51―2, the second drainage pipe 53―2 and the condensing pipe 54, the water - soluble odor gas of the odor gas (a), for example, ammonia(NH₃) gas, is dissolved in the steam - condensed water (c), and then the water - soluble odor gas is stored in the steam - condensed water storage tank 58 with the steam - condensed water (c), and thereafter discharged. Accordingly, the offensive odor is reduced.

The odor gas (a), of the odor gas (a) and the steam - condensed water (c) having been transmitted from the outlet 54―2 of the condensing pipe 54, does not enter the steam - condensed water storage tank 58, because of the below - described operation of the Y - shaped pipe 56. Rather, the odor gas (a) is transmitted to the upper part 32a of the combustion chamber 32 through the odor gas transmission outlet 32b, by means of the odor gas transmission pipe 57 whose one end 57―1 is connected to the upper part 32a of the combustion chamber 32. Accordingly, the flammable odor gas of the odor gas (a) is burnt by the temperature, about 250°C, of the combustion gas heat in the upper part 32a of the conbustion chamber 32. Accordingly the offensive odor is removed.

Since, at this time, the odor gas (a) is not mixed with the steam (b) as below - described, the flammable odor gas of the offensive odor gas (a) can be completely burnt.

The Y - shaped pipe 56 has the operation as follows :

The upper outlet 56―2 of the Y - shaped pipe 56 is connected to the other end 57―2 of the odor gas transmission pipe 57. The upper inlet 56―1 of the Y - shaped pipe 56 is connected to the outlet 54―2 of the condensing pipe 54 in order to make the steam - condensed water (c), of the odor gas (a) and the steam - condensed water (c) having been transmitted from the outlet 54―2 of the condensing pipe (54), flow down to the steam - condensed water storage tank 58. And the lower outlet 56―3 of the Y―shaped pipe 56 is connected to the steam - condensed water storage tank 58. Accordingly, the steam - condensed water (c) flowing down from the condensing pipe 54 flows down to the steam - condensed water storage tank 58 through the Y - shaped pipe 56.

At this time, since one end of the upper outlet 56―2 of the Y - shaped pipe 56 faces upward, the steam - condensed water (c) can not flow to the upper outlet 56―2. Accordingly, the steam - condensed water flows down only through the lower outlet 56―3.

Meanwhile, in order to prevent the odor gas (a), in gas state, from entering the steam - condensed water storage tank 58 through the first drainage pipe 51―2, the second drainage pipe 53―2 and the Y - shaped pipe 56, the water surface level of the steam - condensed water (c) in the steam - condensed water storage tank 58 is not lower than each of the upper end 51―2b―1 of the lower part 51―2b of the first drainage pipe 51―2, the upper end 53―2b―1 of the lower part 53―2b of the second drainage pipe 53―2 and the upper end 56b―1 of the lower part 56b of the Y - shaped pipe 56.

And, in order that the steam - condensed water (c) can fill up the lower part 51―2b of the first drainage pipe 51―2, the lower part 53―2b of the second drainage pipe 53―2 and the lower part 56b of the Y - shaped pipe 56, the lower part 51―2b of the first drainage pipe 51―2, the lower part 53―2b of the second drainage pipe 53―2 and the lower part 56b of the Y - shaped pipe 56 are placed lower than an upper end 59a of the steam - condensed water - discharging pipe 59.

Accordingly, the odor gas (a) making contact with the water surface, of the steam - condensed water (c), which is not lower than the upper ends 51―2b―1, 53―2b―1 and 56b―1 of the lower parts 51―2b, 53―2b, 56b can not flow in the direction to the steam - condensed water (c) in the steam - condensed water storage tank 58. As a result, the odor gas (a), having been transmitted through the upper inlet 56―1 of the Y - shaped pipe 56 from the condensing pipe 54, is transmitted to the upper part 32a of the combustion chamber 32 through the upper outlet 56―2 of the Y - shaped pipe 56, the odor gas transmission pipe 57 and the odor gas transmission outlet 32b, so that the odor gas (a) is burnt by the combustion gas heat.

According as all of the lower parts 51―2b, 53―2b and 56b are positioned below the upper end 59a of the steam - condensed water - discharging pipe 59, the water surface of the steam - condensed water (c) in the steam - condensed water storage tank 58 maintains the level which is not lower than the upper end 59a of the steam - condensed water - discharging pipe 59. Therefore, the operation that the steam - condensed water (c) fills up the lower parts 51―2b, 53―2b and 56b is performed .

That is, when the water surface level of the steam - condensed water (c) in the steam - condensed water storage tank 58 is higher than the upper end 59a, the water surface level WH' of the steam - condensed water (c) descends to the level WH as shown by the arrow C in FIG. 10, so that the steam - condensed water (c) in the steam - condensed water storage tank 58 is discharged outside through the steam - condensed water - discharging pipe 59.

Accordingly, when the water surface level WH' of the water - condensed water (c) gets equalized to the level WH, namely, reaches the upper end 59a of the steam - condensed water - discharging pipe 59, the discharge of the steam - condensed water (c) outside through the steam - condensed water - discharging pipe 59 stops. Therefore, the water surface of the steam - condensed water (c) in the steam - condensed water storage tank 58 maintains the level which is not lower than the upper end 59a of the steam - condensed water - discharging pipe 59. When the steam - condensed water storage tank 58 is manufactured in the state of being filled with water to the level of the upper end 59a of the steam - condensed water - discharging pipe 59, the above - described operation is available from the time of its first utilization.

According as the odor gas (a) and the steam (b) are discharged through the odor gas and steam - discharging outlet 19, the water - soluble odor gas of the odor gas (a) is dissolved into the steam - condensed water (c) and discharged with the steam - condensed water (c), and the rest odor gas excluding the water - soluble odor gas is transmitted to the upper part 32a of the combustion chamber 32, by the above - described operation of the structure of the offensive odor gas - removing part 50. The flammable odor gas of the rest odor gas is burnt by the combustion gas heat of the combustion chamber 32, so that the offensive odor is removed.

At this time, since the steam (b), of the odor gas (a) and the steam (b), becomes steam - condensed water in liquid state by virtue of the operation that the steam (b) gets condensed into steam - condensed water, and the steam - condensed water (c) flows down to the steam - condensed water storage tank 58, the flammable odor gas transmitted to the upper part 32a of the combustion chamber 32 has the state of not being mixed with the steam (b). Accordingly, the flammable odor gas is completely burnt by combustion in state of not being mixed with the steam (b), and as a result the offensive odor gas is removed.

And since the steam (b) is not transmitted to the upper part 32a of the combustion chamber 32, the present invention can prevent heat efficiency of the combustion chamber 32 from descending due to the combustion chamber 32 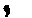 s temperature descent caused by the steam, and prevent the inside of the combustion chamber 32 from rusting due to the steam.

When the temperature of the odor gas (a) and the steam (b) passing through the second filter 53 reaches a predetermined degree, preferably about 70°C, or above, the thermo - sensor 53s makes the agitator 40, the absorbing and transmitting fan 52 and the cooling device 55 (a cooling fan 55―1 in the air - cooling cooler) turn on, so that the fermenting step and the pyrolysis and drying step proceed. When the temperature of the odor gas (a) and the steam (b) becomes below about 70°C, the thermo - sensor 53s makes the agitator 40, the absorbing and transmitting fan 52 and the cooling device 55 (the cooling fan 55―1 in the air - cooling cooler) turn off. Accordingly, the fermenting step and the pyrolysis and drying step terminate. As a result, an automation of the proceeding and terminating these steps is possible by the present invention.

In another embodiment, in addition to the above - described operation, as shown in FIGs. 6, 7, and 11, since the food garbage lift vat 110, which is supported by a lift - supporting bar 100, and driven by a motor 101, a chain 102 and a chain gear 103, is installed in order to lift food garbage and to put the food garbage in the food garbage tank 10 from outside, it is easily performed to lift a large amount of the food garbage and to put a large amount of the food garbage in the food garbage tank 10, without directly handling the dirty food garbage by hand.

Additionally, since a cover 12 of an inlet part 11 of the food garbage tank 10 is driven by a motor 200, a chain 201 and a chain gear 202, the cover 12 which is stained with dirty food garbage can be easily opened and closed without directly handling it by hand, so that the work performance efficiency is enhanced, and the food garbage is easily put in the food garbage tank 10.

By virtue of the above - described structure and operation of the present invention, the present invention has following effects.

First, since the present invention performs the fermenting operation by utilizing the ferment funguses in the food garbage itself and in air, and oxygen in air without using an additional ferment fungus, the present invention has no trouble in keeping, managing or adding the additional ferment fungus.

Second, since the present invention agitates and decomposes the food garbage with the first plates, the second plates and the third plates of the agitator, and crushes the food garbage by the uneven parts of the second plates, and maintains stable temperature for the fermentation, and stable temperature for the pyrolysis and drying by means of the indirect heating by the heat - medium, effects of the fermentation, and the pyrolysis and drying can be maximized.

Third, since the present invention maintains optimal temperatures for the fermenting step and the pyrolysis and drying step for optimal time, the fermenting step and the pyrolysis and drying step for composting of the food garbage can be high - speedly completed for a minimum time.

Fourth, since the present invention does not need addition such as the ferment fungus and moisture content percentage - controlling stuff, the present invention can maximize quantity - decreasing effect of the food garbage.

Further, the present invention can easily remove, by simple structure, the offensive odor gas generated during the fermenting step and the pyrolysis and drying step, by means of the water - soluble odor gas 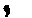 being dissolved into the steam - condensed water and being discharged with the steam - condensed water, and by means of the flammable odor gas 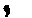 , of the offensive odor gas, being burnt by the combustion gas heat.

Still further, since the steam, of the offensive odor gas and the steam generated in the fermenting step of the food garbage and the pyrolysis and drying step of the food garbage, gets condensed into the steam - condensed water, and discharged, and the water - soluble odor gas of the odor gas is dissolved into the steam - condensed water, and discharged with the steam - condensed water, the flammable odor gas of the state of not being mixed with the steam is burnt by combustion gas heat at the upper part of the combustion chamber, so that the flammable odor gas is completely burnt.

Accordingly heat efficiency of the combustion chamber can be prevented from descending due to the combustion chamber 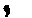 s temperature descent caused by the steam ; and the inside of the combustion chamber can be prevented from rusting due to the steam.

Still further, since the assembly and the disassembly of the agitator are easy, its cleaning is also easy. Since its volume is not big, it is easy to install it in a small space.

In another embodiment of the present invention, without directly handling the dirty food garbage by hands, a large amount of food garbage can be easily put in the food garbage tank, by the food garbage lift vat. Moreover, since the cover of the garbage tank, which is stained with the dirty food garbage, can be easily opened and closed by the motor without directly handling it by hand, the work performance efficiency for the putting - in of the food garbage is enhanced.

It will be apparent to those skilled in the art that various modifications and variations can be made in the present invention without departing from the spirit or the scope of the invention. Accordingly, it is intended that the present invention covers the modifications and variations of this invention provided they come within the scope of the appended claims and their equivalents.

## Claims

1. A high - speed fermenting and drying apparatus for food garbage, comprising : a food garbage tank (10) in which an inlet part (11) having a cover (12) is installed at upper part, and an outlet (13) is installed at one side 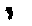 s lower part, in order to be able to discharge food garbage (1) outside after agitating,fermenting by ferment funguses, and drying the food garbage (1) ; an agitator (40) including a rotation shaft (41) and plural agitating arms (42) in order to be able to agitate the food garbage (1) put in the food garbage tank (10) ; a heat - supplying part (30) including a burner (31), a combustion chamber (32), and a chimney (34) in order to be able to heat the food garbage tank (10) ; and an odor gas and steam - discharging outlet (19) installed at the upper part of the food garbage tank (10), or at the inlet part (11) thereof, in order to discharge offensive odor gas and steam generated during the food garbage (1) 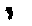 s fermentation and drying ; characterized
in that a jacket (20) for heating the food garbage tank (10) through heat medium (21) embraces the food garbage tank (10), and plural combustion gas pipes (33) for heating the heat medium (21) are installed inside the jacket (20) ;
in that the heat - supplying part (30) includes the combustion gas pipes (33) as parts of the combustion chamber (32), so that the jacket (20) is surrounded by the combustion chamber (32) ;
in that the jacket (20) has a heat medium thermo - sensor (22) for sensing temperature of the heat medium (21) in the jacket (20), and a temperature and time controller MC, is installed, which is for controlling the burner (31) according to signal of the heat medium thermo - sensor (22) in order to maintain predetermined temperature of the heat medium (21) for predetermined time, during a fermenting step of the food garbage (1) and during a pyrolysis and drying step of the food garbage (1) ;
in that an air intake (18) for continuously supplying the ferment funguses and oxygen in air to the food garbage tank (10) is installed at the upper part of the food garbage tank (10) ;
in that the agitator (40) has first rectangular plates (43) each of which is, as one united body, joined with one end of each of the agitating arms (42) and slopes to lengthwise direction of each of the agitating arms (42), second rectangular plates (44) each of which is joined with each of the first plates (43) to overlap in correspondence with each of the first plates (43), and almost right - angled triangle - shaped third plates (45) each of which has sloping surface slightly curved outward and is joined with each of the second plates (44), to be perpendicular to, and in diagonal direction of, each of the second plates (44), in order that the food garbage (1) in the food garbage tank (10) can be mixed with air during forward rotation of the agitator (40) and in order that the food garbage (1) in the food garbage tank (10) can be discharged outside through the outlet (13) during reverse rotation of the agitator (40) ;
in that the second rectangular plate (44) for overlapping in correspondence with the first plate (43) is screwed to the first plate (43) in order to have possibility of being assembled or being disassembled, and the second plate (44) has position - controlling grooves (44b) for controlling the position of the second plate (44) with respect to the first plate (43), and one end of the second plate (44) is formed unevenly as an uneven part (44c) for crushing solid stuff contained in the food garbage (1) ;
in that an offensive odor gas - removing part (50) is connected to the odor gas and steam - discharging outlet (19) through a connection pipe (50―1) through which the odor gas and the steam pass, in order that the offensive odor gas can be removed, by means of water - soluble odor gas 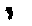 , of the offensive odor gas, being dissolved into steam - condensed water and then being discharged with the steam - condensed water, and by means of transmitting rest gas excluding the water - soluble odor gas to upper part (32a) of the combustion chamber (32) for flammable odor gas of the rest gas to be burnt, according as the offensive odor gas and the steam generated in the fermenting step of the food garbage (1) and the pyrolysis and drying step of the food garbage (1) are discharged through the odor gas and steam - discharging outlet(19) ;
and the offensive odor gas - removing part (50) comprises :
a first filter (51) which is connected to a connection pipe (50―1) and has a first drainage pipe (51―2) through which steam - condensed water flows down to a steam - condensed water storage tank (58) when the odor gas and the steam, having been discharged from the odor gas and steam - discharging outlet (19) through the connection pipe 50―1, pass through inside (51a) of the first filter (51), and is also connected to a connection pipe (51―1) in order that the odor gas and the steam having passed through the inside (51a) can be absorbed to an absorbing and transmitting fan (52) ;
the absorbing and transmitting fan (52) which is connected to the connection pipe (51―1) and is to absorb the odor gas and the steam from the first filter (51) through the connection pipe (51―1), and also connected to a connection pipe (52―1) in order to transmit the odor gas and the steam having been absorbed as above to the second filter (53) ;
the second filter (53) which is connected to the connection pipe (52―1) and has a second drainage pipe (53―2) through which steam - condensed water flows down when the odor gas and the steam, having been transmitted from the absorbing and transmitting fan (52) through the connection pipe 52―1, pass through inside (53a) of the second filter (53), and is also connected to a connection pipe (53―1) in order that the odor gas and the steam having passed through the inside (53a) can be transmitted to a condensing pipe (54) ;
the condensing pipe (54) which is connected to the connection pipe (53―1), and to be cooled by a cooling device (55) in order that the steam can be condensed into steam - condensed water when the odor gas and the steam, having been transmitted from the second filter (53) through the connection pipe 53―1, pass through inside (54a) of the condensing pipe (54) ;
the cooling device (55) for cooling the condensing pipe (54) ;
an odor gas transmission pipe (57) whose one end (57―1) is connected to the upper part (32a) of the combustion chamber (32), in order that the odor gas, of the odor gas and the steam - condensed water having been transmitted from an outlet (54―2) of the condensing pipe (54), can be transmitted to the upper part (32a) of the combustion chamber (32), for flammable odor gas of the odor gas to be burnt ;
a Y - shaped pipe (56) which includes an upper outlet (56―2) connected to the other end (57―2) of the odor gas transmission pipe (57), an upper inlet (56―1) connected to the outlet (54―2) of the condensing pipe (54) in order that the steam - condensed water, of the odor gas and the steam - condensed water having been transmitted from the outlet (54―2) of the condensing pipe (54), can flow down to the steam - condensed water storage tank (58), and a lower outlet (56―3) through which the steam - condensed water can flow down to the steam - condensed water storage tank (58) ; and
the steam - condensed water storage tank (58) for storing the steam - condensed water flowing down through the first drainage pipe (51―2), the second drainage pipe (53―2) and the Y - shaped pipe (56), and for then discharging the steam - condensed water outside through a steam - condensed water - discharging pipe (59) ;
in that water surface level of the steam - condensed water in the steam - condensed water storage tank (58) is not lower than each of an upper end (51―2b―1) of a lower part (51―2b) of the first drainage pipe (51―2), an upper end (53―2b―1) of a lower part (53―2b) of the second drainage pipe (53―2) and an upper end (56b―1) of a lower part (56b) of the Y - shaped pipe (56), in order to prevent the odor gas, in gas state, from entering the steam - condensed water storage tank (58) through the first drainage pipe (51―2), the second drainage pipe (53―2) and the Y - shaped pipe (56);
and the lower part (51―2b) of the first drainage pipe (51―2), the lower part (53―2b) of the second drainage pipe (53―2) and the lower part (56b) of the Y - shaped pipe (56) are placed lower than an upper end (59a) of the steam - condensed water - discharging pipe (59), in order that the steam - condensed water can fill up the lower part (51―2b) of the first drainage pipe (51―2), the lower part (53―2b) of the second drainage pipe (53―2) and the lower part (56b) of the Y - shaped pipe (56) ; and
in that the second filter (53) has a thermo - sensor (53s) for making the agitator (40), the absorbing and transmitting fan (52) and the cooling device (55) turn on, when temperature of the odor gas and the steam passing through the second filter (53) reaches predetermined degree or above, and for making the agitator (40), the absorbing and transmitting fan (52) and the cooling device (55) turn off, when temperature of the odor gas and the steam passing through the second filter (53) becomes below the predetermined degree.

2. A high - speed fermenting and drying apparatus for food garbage, comprising: a food garbage tank (10) in which an inlet part (11) having a cover (12) is installed at upper part, and an outlet (13) is installed at one side 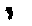 s lower part, in order to be able to discharge food garbage (1) outside after agitating, fermenting by ferment funguses, and drying the food garbage (1) ; an agitator (40) including a rotation shaft (41) and plural agitating arms(42) in order to be able to agitate the food garbage (1) put in the food garbage tank (10) ; a heat - supplying part (30) including a burner (31), a combustion chamber (32), and a chimney (34) in order to be able to heat the food garbage tank (10) ; and an odor gas and steam - discharging outlet (19) installed at the upper part of the food garbage tank (10), or at the inlet part (11) thereof, in order to discharge offensive odor gas and steam generated during the food garbage (1) 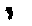 s fermentation and drying ; characterized
in that a jacket (20) for heating the food garbage tank (10) through heat medium (21) embraces the food garbage tank (10), and plural combustion gas pipes (33) for heating the heat medium (21) are installed inside the jacket (20) ;
in that the heat - supplying part (30) includes the combustion gas pipes (33) as parts of the combustion chamber (32), so that the jacket (20) is surrounded by the combustion chamber (32) ;
in that the jacket (20) has a heat medium thermo - sensor (22) for sensing temperature of the heat medium (21) in the jacket (20), and a temperature and time controller MC, is installed, which is for controlling the burner (31) according to signal of the heat medium thermo - sensor (22) in order to maintain predetermined temperature of the heat medium (21) for predetermined time, during a fermenting step of the food garbage (1) and during a pyrolysis and drying step of the food garbage (1) ;
in that an air intake (18) for continuously supplying the ferment funguses and oxygen in air to the food garbage tank (10) is installed at the upper part of the food garbage tank (10) ;
in that the agitator (40) has first rectangular plates (43) each of which is, as one united body, joined with one end of each of the agitating arms (42) and slopes to lengthwise direction of each of the agitating arms (42), second rectangular plates (44) each of which is joined with each of the first plates (43) to overlap in correspondence with each of the first plates (43), and almost right - angled triangle - shaped third plates (45) each of which has sloping surface slightly curved outward and is joined with each of the second plates (44), to be perpendicular to, and in diagonal direction of, each of the second plates (44), in order that the food garbage (1) in the food garbage tank (10) can be mixed with air during forward rotation of the agitator (40) and in order that the food garbage (1) in the food garbage tank (10) can be discharged outside through the outlet (13) during reverse rotation of the agitator (40) ;
in that the second rectangular plate (44) for overlapping in correspondence with the first plate (43) is screwed to the first plate (43) in order to have possibility of being assembled or being disassembled, and the second plate (44) has position - controlling grooves (44b) for controlling the position of the second plate (44) with respect to the first plate (43), and one end of the second plate (44) being formed unevenly as an uneven part (44c) for crushing solid stuff contained in the food garbage (1) ;
in that an offensive odor gas - removing part (50) is connected to the odor gas and steam - discharging outlet (19) through a connection pipe (50―1) through which the odor gas and the steam pass, in order that the offensive odor gas can be removed, by means of water - soluble odor gas 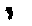 , of the offensive odor gas, being dissolved into steam - condensed water and then being discharged with the steam - condensed water, and by means of transmitting rest gas excluding the water - soluble odor gas to upper part (32a) of the combustion chamber (32) for flammable odor gas of the rest gas to be burnt, according as the offensive odor gas and the steam generated in the fermenting step of the food garbage (1) and the pyrolysis and drying step of the food garbage (1) are discharged through the odor gas and steam - discharging outlet(19) ;
and the offensive odor gas - removing part (50) comprises :
a first filter (51) which is connected to a connection pipe (50―1) and has a first drainage pipe (51―2) through which steam - condensed water flows down to a steam - condensed water storage tank (58) when the odor gas and the steam, having been discharged from the odor gas and steam - discharging outlet (19) through the connection pipe (50―1), pass through inside (51a) of the first filter (51), and is also connected to a connection pipe (51―1) in order that the odor gas and the steam having passed through the inside (51a) can be absorbed to an absorbing and transmitting fan (52) ;
the absorbing and transmitting fan (52) which is connected to the connection pipe (51―1) and is to absorb the odor gas and the steam from the first filter (51) through the connection pipe (51―1), and also connected to a connection pipe (52―1) in order to transmit the odor gas and the steam having been absorbed as above to the second filter (53) ;
the second filter (53) which is connected to the connection pipe (52―1) and has a second drainage pipe (53―2) through which steam - condensed water flows down when the odor gas and the steam, having been transmitted from the absorbing and transmitting fan (52) through the connection pipe (52―1), pass through inside (53a) of the second filter (53), and is also connected to a connection pipe (53―1) in order that the odor gas and the steam having passed through the inside (53a) can be transmitted to a condensing pipe (54) ;
the condensing pipe (54) which is connected to the connection pipe (53―1), and to be cooled by a cooling device (55) in order that the steam can be condensed into steam - condensed water when the odor gas and the steam, having been transmitted from the second filter (53) through the connection pipe (53―1), pass through inside (54a) of the condensing pipe (54) ;
the cooling device (55) for cooling the condensing pipe (54) ;
an odor gas transmission pipe (57) whose one end (57―1) is connected to the upper part (32a) of the combustion chamber (32), in order that the odor gas, of the odor gas and the steam - condensed water having been transmitted from an outlet (54―2) of the condensing pipe (54), can be transmitted to the upper part (32a) of the combustion chamber (32), for flammable odor gas of the odor gas to be burnt ;
a Y - shaped pipe (56) which includes an upper outlet (56―2) connected to the other end (57―2) of the odor gas transmission pipe (57), and an upper inlet (56―1) connected to the outlet (54―2) of the condensing pipe (54) in order that the steam - condensed water, of the odor gas and the steam - condensed water having been transmitted from the outlet (54―2) of the condensing pipe (54), can flow down to the steam - condensed water storage tank (58), and a lower outlet (56―3) through which the steam - condensed water can flow down to the steam - condensed water storage tank (58) ; and
the steam - condensed water storage tank (58) for storing the steam - condensed water flowing down through the first drainage pipe (51―2), the second drainage pipe (53―2) and the Y - shaped pipe (56), and for then discharging the steam - condensed water outside through a steam - condensed water - discharging pipe (59) ;
in that water surface level of the steam - condensed water in the steam - condensed water storage tank (58) is not lower than each of an upper end (51―2b―1) of a lower part (51―2b) of the first drainage pipe (51―2), an upper end (53―2b―1) of a lower part (53―2b) of the second drainage pipe (53―2) and an upper end (56b―1) of a lower part (56b) of the Y - shaped pipe (56), in order to prevent the odor gas, in gas state, from entering the steam - condensed water storage tank (58) through the first drainage pipe (51―2), the second drainage pipe (53―2) and the Y - shaped pipe (56) ;
and the lower part (51―2b) of the first drainage pipe (51―2), the lower part (53―2b) of the second drainage pipe (53―2) and the lower part (56b) of the Y - shaped pipe (56) are placed lower than an upper end (59a) of the steam - condensed water - discharging pipe (59), in order that the steam - condensed water can fill up the lower part (51―2b) of the first drainage pipe (51―2), the lower part (53―2b) of the second drainage pipe (53―2) and the lower part (56b) of the Y - shaped pipe (56) ; and
in that the second filter (53) has a thermo - sensor (53s) for making the agitator (40), the absorbing and transmitting fan (52) and the cooling device (55) turn on, when temperature of the odor gas and the steam passing through the second filter (53) reaches predetermined degree or above, and for making the agitator (40), the absorbing and transmitting fan (52) and the cooling device (55) turn off, when temperature of the odor gas and the steam passing through the second filter (53) becomes below the predetermined degree ;
in that a food garbage lift vat (110), which is supported by a lift - supporting bar (100), and driven by a motor (101), a chain (102) and a chain gear (103), is installed in order to lift food garbage and to put the food garbage in the food garbage tank (10) from outside ; and
in that a cover (12) of the inlet part (11) of the food garbage tank (10) is driven by a motor (200), a chain (201) and a chain gear (202).
